# EUROPEAN PATENT APPLICATION

(11) **EP 4 541 876 A1**
(43) Date of publication of application: **23.04.2025**
(21) Application number: 23204642.5
(22) Date of filing: 19.10.2023
(51) Int. Cl.: C11D 3/30, C11D 3/48, C11D 10/04, C11D 17/00, A01N 33/08, A01P 1/00, C11D 1/14, C11D 1/22, C11D 1/29

(54) **LIQUID PRESERVATIVE-FREE DETERGENT COMPOSITION**

(71) Applicant: Dalli-Werke GmbH & Co. KG, 52224 Stolberg (DE)
(72) Inventor: SOUREN, Jürgen, 52080 Aachen (DE); BARTELS, Marc, 07407 Rudolstadt (DE); WOLFF-SCHLADITZ, Bernd, 52355 Düren (DE); GIEBLER, Claudia, 52249 Eschweiler (DE)
(74) Representative: f & e patent

(57) **Abstract**

The present invention relates to aqueous liquid detergent compositions, wherein the compositions exhibit a high microbial stability without the use of conventional preservatives. The liquid detergent composition of the invention is particularly useful for washing laundry, where a good cleaning performance is needed and where the consumer takes into account the environmental impact of the detergent composition. The composition is boron-free and compres (i) at least one anionic surfactant, preferably selected from the group of sulfonates, ether sulfates, and/or alkyl sulfates, and salts of fatty acids (soap), and combinations thereof, (ii) at least one alkanolamine, preferably ethanolamine, even more preferred monoethanolamine, (iii) at least 50 wt.% water, wherein said composition has a pH value in the range from 6 to 10, and wherein said composition comprises less than 0.05 wt.% of a total amount of conventional preservative(s) of the group comprising benzoic acid, benzoates, phenoxyethanol, sorbates, sulfites, phenoxyethanol, sodium or zinc pyrithione, bronopol, iodopropynylbutylcarbamate, formaldehyde and formaldehyde releaser, glyoxal, glutaral and isothiazolinones. The use of alkanolamines and of the combination of alkanolamines (ii) and anionic surfactant(s) (i) to reduce/inhibit microbial growth in aqueous systems, preferably in aqueous detergent compositions, more preferred in boron-free aqueous detergent compositions, which are free of any conventional preservative, is also disclosed.

## Description

The present invention relates to aqueous liquid detergent compositions, wherein the compositions exhibit a high microbial stability without the use of conventional preservatives. The liquid detergent composition of the invention is particularly useful for washing laundry, providing good cleaning performance, wherein the consumer takes into account the environmental impact of the detergent composition.

Liquid detergents are well known in the state of the art and have become increasingly popular for consumers in recent years, because they offer a number of advantages over solid detergents including, among others, easier dosing, addition and dissolution in the wash liquor, possibility of spot treatment etc.. Perceived as safer and less aggressive towards textiles and the environment, liquid detergents have gained more and more popularity since their introduction to the market, especially for washing colored or sensitive textiles.

Modern laundry detergents are expected to remove a broad variety of soils and stains from natural and artificial textile fibers alike. Over the last couple of decades, laundry detergent compositions were developed to perform improved cleaning at eco-friendly, sustainable and user-friendly conditions, such as washing performance at lower temperatures and lower alkaline content while reducing water consumption and time required for each cleaning cycle.

Many restrictions on formulations are imposed by environmental laws, by higher prices for non-renewable chemical sources, and by increasing consumer awareness and preference for environmentally friendly products.

Boron or boron derivatives have been commonly used as an enzyme stabilizing compound in detergent compositions, particularly those containing a protease. However, boron and its derivatives can accumulate in organisms and have adverse health effects.

Additionally, liquid detergent compositions with a water content of at least 50 wt.% are typically prone to bacterial and fungal growth limiting the storage stability of the product. Microbial stability of liquid compositions is traditionally achieved by using preservation agents. Many different preservatives are known, but since they act by exerting a biocidal effect, it is a further object of the invention to decrease those conventional preservation agents in the provided compositions. Thus, the intention of the present invention is to provide aqueous liquid detergent compositions free of boron compounds and having low content of conventional preservatives, but measuring up to the consumer's expectations.

The choice of formulation ingredients suitable to develop such boron and preservative-free but microbial stable formulations is not a simple one, because the selection will also affect both, the stability of the other components (e.g., enzymes) and the physical stability of the final product.

Former attempts to enhance the stability of a detergent composition against bacterial and fungal growth without using conventional preservatives are known:
WO 19166203 A1 describes a liquid aqueous cleaning agent, which is isothiazolinone-free and comprises an anionic surfactant and at least one sorbic acid.

EP 1 700 904 A1 describes boron-free liquid detergent compositions comprising enzymes and a mixture of anionic and nonionic surfactants.

WO 2013/004635 A1 describes liquid detergent compositions with improved enzyme stability by using a combination of peptide aldehyde and a specific salt.

US 2017/0121646 describes the stabilization of enzymes by certain inhibitors in liquid detergents.

WO 2021/121394 A1 describes stabilized boron-free enzyme compositions, comprising aliphatic 1 ,2-diols, which exhibit excellent physical and microbial stability.

As can be seen from the prior art, there is still a need to further reduce conventional preservatives in detergents while maintaining a long-term storage stability and high cleaning performance.

The object is met by a boron-free liquid detergent composition comprising:
(i) at least one anionic surfactant, preferably selected from the group of sulfonates, alkyl ether sulfates, alkyl sulfates, salts of fatty acids (soap), and combinations thereof;
(ii) at least one alkanolamine, preferably ethanolamine, even more preferred monoethanolamine;
(iii) at least 50 wt.% water, wherein the wt.% is based on the total weight of the composition;

wherein said composition has a pH value in the range from 6 to 10, and
wherein said composition is free of any conventional preservatives (as defined herein).

It was found that the reduction of boron-containing compounds in an aqueous liquid detergent composition resulted in a decreased stability of the detergent against microbial growth, particularly yeast. Conventionally, this antimicrobial effect would have been replaced by a preservative, but unexpectedly, a composition according to the invention comprising at least one alkanolamine(s) (ii) in combination with at least one anionic surfactant(s) (i) can render the use of conventional preservatives for reducing microbial growth and maintaining long-term storage stability superfluous.

The present invention relates to an aqueous liquid laundry detergent having the same or even better microbial and physical stability than common detergents while being significantly less allergenic and more sensitive through the avoidance of added preservatives.

The term "conventional preservatives" refers to any preservative well known for having an anti-microbial or biocidal effect. Such preservatives are in particular benzoic acid, benzoates, sorbates, sulfites, phenoxyethanol, sodium pyrithione, zinc pyrithione, bronopol, iodopropynylbutylcarbamate, formaldehyde and formaldehyde releaser, glyoxal, glutaral and isothiazolinones (like methylisothiazolinone, chloromethylisothiazolinone, benzisothiazolinone, octylisothiazolinone, and butylbenzisothiazolinone).

A formaldehyde releaser, formaldehyde donor or formaldehyde-releasing preservative is a chemical compound that slowly releases formaldehyde such as, e.g., DMDM hydantoin.

According to the invention none of the mentioned compounds is/are present in the aqueous liquid detergent composition (at least not intentionally added), thus, the composition is "free of conventional preservatives" if it is free of benzoic acid, benzoates, sorbates, sulfites, phenoxyethanol, sodium pyrithione, bronopol, iodopropynylbutylcarbamate, formaldehyde and formaldehyde releaser, glyoxal, glutaral and isothiazolinones. It should be noted that ethanol is not considered as a preservative according to the present disclosure.

The present invention refers to preservative-free compositions. With "preservative-free" is meant that none of the mentioned conventional preservatives are intentionally added during manufacturing of the detergent. There might be residual amounts of preservatives e.g., resulting from the addition of compounds like color preparations, dye transfer inhibitor or enzymes, which have been included by the manufacturer during/after production to ensure their storage stability.

A skilled person will further acknowledge, that although a liquid detergent composition according to the present invention may be defined as being "free of' a particular compound or ingredient, it may contain undesired trace amounts of said compound or ingredient. Said undesired trace amounts may be present in a liquid detergent composition according to the present invention in an amount of less than 0.0015 wt.% (i.e. less than 15 ppm), preferably less than 0.001 wt.%, more preferred 0.0005 wt.%, even more preferred less than 0.0002 wt.%, and even more preferred less than 0.0001 wt.% based upon the total weight of the composition individually for each of the compounds. It is further preferred that the total content of all the mentioned compounds in the composition is below 0.05% by weight, preferably less than 0.025% by weight, more preferably less than 0.01% by weight, still more preferably less than 0.005% by weight, even more preferred less than 0.002 wt.%, most preferred a detergent composition according to the present invention does not contain any of the undesired compounds or ingredients.

Since higher amounts of phenoxyethanol are typically used as a conventional preservative, a "preservative-free" liquid detergent according to the present invention may contain undesirable trace amounts of phenoxyethanol in an amount of less than 0.05% by weight, preferably less than 0.025% by weight, more preferably less than 0.01% by weight, still more preferably less than 0.005% by weight, and most preferably the composition is free of any phenoxyethanol.

The term "microbial stability" relates to the ability to resist bacterial and fungal growth. This may be evaluated by inoculating the liquid composition with microorganisms and measure subsequent growth of the microorganisms to confirm that they are not proliferating, or growth is reduced or inhibited. The composition according to the present invention is particularly useful in preventing growth of yeast.

As used herein, "liquid detergent composition" refers to any detergent treatment composition which is not solid, i.e., in tablet, granule, powder or pellet form. A preferred liquid detergent composition is a laundry detergent composition. Examples of aqueous liquid laundry detergents include heavy-duty liquid laundry detergents for use in the wash cycle of automatic washing machines, special detergents such as fine wash, color care or sensitive detergents and those suitable for washing delicate garments, e.g., those made of silk or wool, either by hand or in the wash cycle of automatic washing machines.

An "aqueous liquid detergent composition" according to the present invention refers to a liquid detergent composition having at least 50 wt.% water.

The terms "comprising", "comprises" and "comprised of" as used herein are synonymous with "including", "includes" or "containing", "contains", and are inclusive and open-ended and do not exclude additional, non-recited members, elements or method steps. It will be appreciated that the terms "comprising", "comprises" and "comprised of" as used herein comprise the terms "consisting of", "consists" and "consists of".

For the sake of clarity, all amounts of enzymes in this document refer to the active content of the enzyme, unless otherwise noted.

In all embodiments of the present disclosure, all percentages are by weight of the total composition, unless specifically stated otherwise. All ratios are weight ratios, unless specifically stated otherwise.

### Liquid detergent composition

The liquid detergent composition preferably is a laundry detergent provided for domestic or professional use. Preferred is that the detergent composition is used at domestic level, preferably in domestic appliances, more preferably in laundry machines.

The viscosity of the liquid detergent according to the invention can be measured using standard techniques (e.g., Brookfield viscometer LVT-I at 12 U/min and 23 °C, spindle 1) and is preferably in the range of 10 to 3000 mPa*s, more preferably in the range of 20 to 2000 mPa*s, even more preferred 30 to 1500 mPa*s, or 50 to 1000 mPa*s. Most preferably, the liquid detergent has a viscosity in the range of 65 mPa*s to 800 mPa*s, or even 80 to 600 mPa*s.

### Solvents

The composition according to the present invention is an aqueous liquid detergent composition comprising mainly water.

The composition of the present invention may comprise water in an amount of at least 50 wt.%, preferably more than 50 wt.%, or more than 55 wt.%, preferably more than 60 wt.%, or more than 65 wt.% based on the total weight of the composition. Most preferably the composition comprises more than 70 wt.% water based on the total weight of the composition.

The composition of the present invention may comprise water in an amount from 50 to 95 wt.%, preferably from 55 to 90 wt.%, more preferably from 60 to 85 wt.%, even more preferred from 65 to 80 wt.%, most preferably from 70 to 75 wt.% based on the total weight of the composition.

In a preferred embodiment, the detergent comprises a further solvent, preferably an organic solvent. Suitable organic solvents to be incorporated into liquid detergent compositions according to the present invention are ethers, alcohols, diols, polyols, ketones, amides and/or esters.

One class of preferred solvents are monomeric polar compounds like methanol, ethanol, 1-propanol, 2-propanol, propylene carbonate, acetone, acetonyl acetone, diacetone alcohol, ethyl acetate, butanone, monomethyl ether and/or mixtures thereof.

Another class of preferred solvents are polyols, which may be a linear or branched alcohol with two or more hydroxyl groups. The polyol typically includes less than 9 carbon atoms, preferably less than 8, or 7, or 6, or 5, or 4, or 3 carbon. The diols are preferably added as monomers (e.g., mono propylene glycol), dimers (e.g., dipropylene glycol) and/or trimers (e.g., tripropylene glycol).

Embodiments of suitable polyols include, but not limited to: ethylene glycol, polyethylene glycol, propylene glycol, butylene glycol, pentylene glycol, hexylene glycol, heptylene glycol, octylene glycol, 2-methyl propane-1,3-diol, xylitol, sorbitol, mannitol, glycerol, isopropylidene glycerol, erythritol, dulcitol, inositol, and adonitol.

Preferably the detergent according to the present invention comprises ethanol, mono propylene glycol (e.g., 1,2-propanediol or 1,3-propanediol) and/or glycerol as organic solvent.

The liquid detergent may comprise a total amount of from 0.01 to 25 wt.%, preferably from 0.03 to 20 wt.%, more preferred from 0.05 to 15 wt.%, even more preferred from 0.075 to 10 wt.%, and most preferred from 0.1 to 5 wt.% of at least one organic solvent, based on the total weight of the composition, wherein said amount can be represented by either one or more type of organic compounds, but the sum (total amount) also is within said range.

The composition of the present invention may comprise ethanol, preferably in an amount of less than 7 wt.%, more preferably less than 6 wt.%, or less than 5 wt.% of the total weight of the composition. Even more preferably, the composition comprises ethanol in an amount of less than 4 wt.%, and most preferred less than 3 wt.%, based on the total weight of the composition.

The composition of the present invention may comprise ethanol in an amount from 0.1 to 7 wt.%, preferably from 0.5 to 6.5 wt.%, more preferably from 1 to 6 wt.%, and most preferred from 1.5 to 4.5 wt.%.

Preferably, the composition of the present invention comprises mono propylene glycol (MPG), if present, in an amount of less than 15 wt.%, preferably less than 12 wt.%, or less than 10 wt.%, or less than 8 wt.%, or less than 6.5 wt.%, more preferably less than 5 wt.%, even more preferably less than 3.5 wt.%. Most preferably, the composition of the present invention comprises MPG in an amount of less than 2 wt.%, based on the total weight of the composition. In an embodiment, the detergent composition is free of any MPG.

It has been found that reducing the amount of added MPG results in a decreased microbial stability of the detergent, which however can be compensated by a composition according to the invention.

### Anionic surfactants

According to the present invention, the detergent comprises at least one anionic surfactant(s) (i) such as of sulfonates, alkyl ether sulfates, alkyl sulfates, salts of fatty acids (soap), and combinations thereof. Unexpectedly, it was found that a combination of an anionic surfactant (i) and an alkanolamine (ii) can significantly increase the microbial stability of a liquid detergent according to the present invention. Said combination can be provided by adding an anionic surfactant in its acid form or having e.g., an alkaline earth metal as a counter-ion, and an alkanolamine separately to the detergent composition, or by providing an anionic surfactant having an alkanolamine as a counter-ion (wherein optionally a further amount of an alkanolamine can be added to the composition, if desired).

Preferred anionic surfactants comprise of a hydrophobic chain CₙH₂ₙ₊₁ with n = 6 to 24, preferably 8 to 20, more preferred 8 to 18, and an anionic hydrophilic group. The hydrophilic group can be e.g., a carboxylate (CₙH₂ₙ₊₁COO⁻ X), a sulfate (CₙH₂ₙ₊₁OSO³⁻ X), or a sulfonate (CₙH₂ₙ₊₁SO³⁻ X). The counter-ion (X) can be any suitable counter-ion known in the art, however, sodium, lithium, potassium and ammonium salts are preferred as inorganic counterion, whereas sodium salts are particularly preferred. Particularly preferred organic counterions are monoethanolamine (MEA) and triethanolamine (TEA). The terms "carboxylate", "sulfate", and "sulfonate" used in this context may throughout the whole content of the description refer to the corresponding acid form, salts thereof and/or mixtures of acid forms and salts.

Water-soluble salts of higher fatty acids, i.e., soaps, are useful carboxylate surfactants in the cleaning composition of the present invention. Soaps can be made by direct saponification of fats and oils or by the neutralization of free fatty acids.

Exemplary fatty acids or salts thereof that can be used may be selected from caprylic acid, capric acid, lauric acid, myristic acid, myristoleic acid, palmitic acid, lauric acid, sapienic acid, palmitoleic acid, stearic acid, oleic acid, elaidic acid, vaccenic acid, linoleic acid, linoelaidic acid, arachidic acid, arachidonic acid, behenic acid, erucic acid, and salts thereof. Among the above listed fatty acids, lauric acid, myristic acid, palmitic acid, and salts thereof are particularly preferred.

Particularly useful are the sodium, potassium and/or alkanol ammonium salts of mixtures of fatty acids derived from coconut oil, palm kernel oil and tallow, i.e., sodium, potassium or alkanol ammonium tallow and coconut soap. Even more preferred are ethanolaminederived salts, e.g., MEA (or TEA) tallow and coconut soap.

The detergent composition according to the present invention may comprise fatty acid or salts thereof, in a total amount of from 0.1 to 15 wt.%, preferably in an amount from 0.5 to 10 wt.%, more preferred from 1 to 8 wt.%, even more preferred from 1.2 to 6.5 wt.%, and most preferred from 1.5 to 5.5 wt.%. This definition should be considered as defining that each of the mentioned added fatty acids or salts thereof can be individually present in the composition in the defined range, however, the total amount of these types of surfactants is also in said range.

Another type of preferred anionic surfactants are alk(en)yl sulfates, sulfonates, alkoxylated alk(en)yl sulfates, ester sulfonates. The preferred alk(en)yl sulfates are the alkali metal, MEA and/or TEA salts and in particular the salts of the sulfuric acid half-esters of the C₈-C₁₈ fatty alcohols, for example from coconut fatty alcohol, palm kernel fatty alcohol, tallow fatty alcohol, lauryl, myristyl, cetyl or stearyl alcohol or of the C₈-C₂₀ oxoalcohols and those half-esters of secondary alcohols of this chain length. Particularly preferred are lauryl sulfate and/or coco sulfate.

The ethoxylated alkyl ether sulfate may be made by sulfating the condensation product of ethylene oxide and C₈-₁₈ alcohols, and neutralizing the resultant product. The C₈-₁₈ ethoxylated alkyl ether sulfate surfactants preferably have 1 to 22 ethylene oxide (EO) units and the counterion is an ammonium alkanolamine or metal cation, most preferably sodium, MEA and/or TEA. Preferred ethoxylated alkyl ether sulfates contain 8 to 18, like 10 to 16 carbon atoms in the fatty alcohol and 3 to 10 ethoxy groups, e.g., sodium myristyl (3 - 6 EO) sulfate or sodium laureth (2-7 EO) sulfate.

Common types of sulfonate surfactants are alkyl- or alkyl aryl sulfonates (e.g., sodium C₁₂₋₁₈ alkyl sulfonate, naphthalene sulfonate, alkyl naphthalene sulfonate), paraffin sulfonates, alkyl benzene sulfonate (ABS), alkylester sulfonates, primary or secondary alkene sulfonates, sulfonated polycarboxylic acids or alpha-olefin sulfonates. C₁₂₋₁₈ alkyl sulfonates and alkyl benzene sulfonates are particularly preferred anionic surfactants. Preferred ethoxylated sulfonate surfactants contain 8 to 18, like 10 to 16 carbon atoms in the fatty alcohol and 3 to 10, preferably 3 to 8, or 3 to 7, or 3 to 6, or 3 to 5 ethoxy groups.

The properties of sulfate or sulfonate surfactants can optionally be modified by introducing propylene oxide units in the chain.

A skilled person will acknowledge, that as surfactants containing ethoxylated alcohols may comprise different EO amounts, the cited degrees of ethoxylation constitute statistically average values that can be a whole or a fractional number for a specific product.

Preferably, the composition according to the present invention comprises at least one anionic surfactant(s) (i) selected from the group of sulfonates (in particular alkyl benzene sulfonates ABS), alkyl ether sulfates, alkyl sulfates, salts of fatty acids (soap), and combinations thereof, more preferably the anionic surfactant is/are independently selected from the group of C₈₋₁₈ alkyl benzene sulfonate, C₈-₁₈ alkyl ether sulfate (3- 10 EO), C₈-C₁₈ alkyl sulfate and/or salts of C₈₋₁₈ fatty acids.

In a preferred embodiment, the liquid detergent comprises at least one anionic surfactant (i) selected from Na-ABS, MEA-ABS, Na-myristyl (3 - 6 EO) sulfate, MEA-myristyl (3 - 6 EO) sulfate, Na-laureth (2-7 EO) sulfate, MEA-laureth (2-7 EO) sulfate, Na tallow and coconut soap, MEA (or TEA) tallow and coconut soap, Na lauryl sulfate and coco sulfate, MEA lauryl sulfate and coco sulfate, as it was found to significantly improve the stability of the composition, when used in combination with an alkanolamine (ii).

The anionic surfactant(s) of the present invention can consist of surfactant(s) of at least one of these types.

The anionic surfactant(s) (i) is/are present in the composition of the invention in a total amount of up to 40 wt.%, or from 0.1 to 30 wt.%, preferably in an amount of from 0.2 to 25 wt.%, more preferred from 0.5 to 23 wt.%, even more preferred from 1 to 22 wt.% or from 1.5 to 21 wt.%, and most preferred from 2 to 20 wt.%, or from 4 to 18 wt.%, or from 5 to 15 wt.%, based on the total weight of the composition. This definition should be considered as defining that each of the mentioned anionic surfactants (i) can be individually present in the composition in the defined range, however, the total amount of these types of surfactants is also in said range.

In a preferred embodiment, the composition according to the invention comprises at least two anionic surfactants (i), even more preferred, the at least two anionic surfactants (i) are selected from ABS and a salt of a C₈₋₁₈ fatty acid.

A particularly useful combination of anionic surfactants (i) providing an improved washing performance and/or stability of the detergent is the addition of anionic surfactants (i) (other than soaps) and soaps in a ratio of from 1:3 to 8:2, preferably from 1:2 to 5:1, more preferably of from 1:1 to 3.5:1.

### Alkanolamines

The liquid detergent composition according to the invention comprises at least one alkanolamine (ii). In general, the amine group of the alkanolamine can be mono-, di-, and trisubstituted (e.g. monoethanolamine (MEA), diethanolamine and triethanolamine (TEA)).

The alkanolamines can generally be added to any of the liquid detergent compositions in alkaline form, in a neutralized or in a partly neutralized form. The term (partly) neutralized in this context refers to alkanolamines being (partly) present in form of their salts.

Suitable alkanolamines to be incorporated into liquid detergent compositions according to the present invention include but are not limited to methanolamine, ethanolamine, 3-amino-1-propanol, 4-amino-1-butanol, and/or mixtures thereof.

Preferably the composition comprises monoethanolamine, diethanolamine and/or triethanolamine, even more preferred the compositions comprises monoethanolamine.

In a preferred embodiment, at least 50 %, preferably at least 70 %, more preferably at least 90 % of the anionic surfactant(s) present in the detergent is/are added in its acid form and neutralized directly in the composition. Preferably the neutralizing agent is an organic compound, more preferably the organic neutralizing compound is an alkanolamine (ii), such as a primary, secondary or a tertiary alkanolamine. The use of an organic neutralizing agent, preferably monoethanolamine (or triethanolamine), contributes a favorable rheology of the resulting composition.

A detergent composition according to the invention may comprise the alkanolamine(s) (ii) in a total amount of up to 7 wt.%, in particular from 0.1 to 6 wt.%, preferably from 0.2 to 5 wt.%, more preferably from 0.25 to 4 wt.%, even more preferred from 0.3 to 2 wt.% and most preferred from 0.8 to 1.8 wt.%, based on the total weight of the composition.

It should be noted (as mentioned above) that either the acid groups of the anionic surfactant(s) can be neutralized with an alkanolamine when added to the composition, or the anionic detergent can be neutralized with another counter-ion. For sake of preservative advantages, it is however preferred that in the composition so many counterions are present that not all of the alkanolamines are bound to the anionic surfactants, but are present either as free ions or in ionic contact with other ingredients. If e.g., MEA is added in form of MEA-citrate three MEA ions can be set free within the composition without necessarily being bound to an anionic surfactant. Further, the alkanolamine can be added as a neutral liquid.

Therefore, the ratio of the molar amount of alkanolamine(s) (ii) to the number of acid groups of the anionic surfactant(s) in the composition may range from 0.1 to 1.5, preferably from 0.2 to 1.3, more preferably from 0.3 to 1.1, and most preferably from 0.4 to 1.

The number of acid groups of the individual compounds such as anionic surfactants, organic acids (e.g., citric acid) or the like can be determined by standard laboratory methods such as titration. The same applies to the determination of the total number of acid groups in the composition.

### pH value

The pH value of a liquid detergent is within a defined range to ensure a mild treatment of the fabric, to maintain the stability of the composition during storage and to allow the ingredients of the composition to function optimally. Enzymes, surfactants and other components have a specific pH range, in which they provide the best results.

It was found that a detergent composition having a pH within the range of from 6 to 10, preferably from 6.3 to 9.8, more preferably from 6.5 to 9.5, even more preferably from 6.8 to 9.2, and most preferably between 7 and 9, gives the best results in terms of cleaning performance, enzyme stability and inhibition of microbial growth.

Unless otherwise stated herein, the pH of the composition is defined as the pH of the aqueous detergent composition at 20 °C. Any meter capable of measuring the pH in 0.01 pH units is suitable. The pH meter should be equipped with a suitable glass electrode with calomel or silver/silver chloride reference.

### Optional ingredients

The liquid detergent composition according to the invention besides the components as cited above may comprise at least one or more further component(s) selected from: builder(s), chelating agent(s), additional surfactant(s), enzymes, non-boron enzyme stabilizer, performance polymers, dye transfer inhibitors, optical brighteners, bleaching agents, bleach activator, bleach catalyst, fabric softeners, pH adjusting ingredients, dyes, perfumes, natural oils and fats, and mineral salts. Preferably, the composition may comprise at least one component selected from: builder(s), chelating agents, additional surfactants, enzymes, perfumes and most preferably the composition may comprise at least one nonionic surfactant, enzyme(s), bittering agents (e.g., Bitrex^{©}) and/or perfumes, but is free of boron or boron compounds.

### Builder

The main function of builders is to soften the washing water, to provide pH regulation and a buffering capacity to the washing liquid and to have an anti-redeposition or dispersing function in the cleaning composition. The physical properties of the cleaning composition are also depending at least partially on the builders that are used. For controlling the pH of the composition or wash liquor, as well as the mineral hardness of the liquor, inorganic as well as organic builders may be incorporated into the composition. In addition, these builders may assist in the removal of particulate soil. It is preferred to not add any phosphates in a detergent composition.

The composition(s) may comprise an organic detergent builder, including polycarboxylate builders in the form of their acid or a salt, including alkali metal salts such as potassium, sodium, and lithium salts or MEA and TEA salts.

Suitable organic builder substances are, for example, the polycarboxylic acids usable in the form of the free acid and/or salts thereof, "polycarboxylic acids" being understood as those carboxylic acids that carry more than one acid function. These are, for example, citric acid, adipic acid, succinic acid, glutaric acid, malic acid, tartaric acid, maleic acid, fumaric acid, sugar acids, as well as mixtures thereof, provided such use is not objectionable for environmental reasons. The free acids typically also possess, besides their builder effect, the property of an acidifying component, and thus also serve to establish a lower and/or milder pH for washing agents. To be recited in this context, in particular, citric acid, succinic acid, glutaric acid, adipic acid, gluconic acid, and/or any mixtures thereof are preferred. If a polycarboxylic acid is present, the composition preferably comprises sodium citrate, MEA citrate, TEA citrate and/or citric acid.

Polymers known as builders are, in particular, polyacrylates that preferably have a molecular weight from 2.000 to 20.000 g/mol. Of this group in turn, the short-chain polyacrylates, which have molecular weights from 2.000 to 10.000 g/mol and particularly preferably from 3.000 to 5.000 g/mol, may be preferred because of their superior solubility.

Examples of suitable homo- or copolymeric acrylates comprise those sold under the trade name of Sokalan^{®} by BASF, for example Sokalan CP5, Sokalan CP10 or Sokalan PA 25Cl, without being limited thereto. However, in a particularly preferred embodiment the detergent composition according to the present invention is free of any polyacrylates, more preferred, the composition is free of any polymeric polycarboxylates.

Further suitable organic builder substances are polysaccharides, e.g., dextrin, oligomers or polymers of carbohydrates, which e.g. can be obtained by partial hydrolysis of starches. Preferably, the hydrolysis products have average molecular weights in the range of 400 to 500000 g/mol. A polysaccharide with a dextrose equivalent (DE) in the range of 0.5 to 40, in particular of 2 to 30, is preferred, DE being a common measure of the reducing effect of a polysaccharide compared to dextrose, which has a DE of 100.

If present, the builder system can comprise one or several of the mentioned builder compounds. If a builder is included, according to the invention, the builder system is preferably present in a total amount ranging from 0.1 to 15 wt.%, e.g., from 0.2 to 12 wt.%, preferably in a total amount ranging from 0.4 to 10 wt.%, more preferably in a total amount ranging from 0.6 to 8 wt.%, even more preferred from 1.0 to 7 wt.%, most preferred from 1.5 to 6 wt.% based on the total weight of the composition of the claimed invention. Thus, either of the builder compound(s) can be present in an amount as defined here, but in any case, the total amount of the builder compound(s) mentioned here is also within the defined range.

Despite their ability to form complexes with calcium, magnesium and other metal ions, within the context of the present application, builders as described above are distinguished from complexing or sequestering agents as described below.

### Complexing / Sequestering agent

The composition of the present invention may contain a chelating agent. The chelating agent(s) have the double-function of chelating ions in the solution to prevent any precipitation in the liquid or jelly composition, and further to support the cleaning result of the composition. Chelating agents can include any of those known in the art, however, according to the invention are different from the builder mentioned above, in particular from citric acid or citrate. Preferably, the composition is free of any phosphates.

Complexing agents are commonly used to support the performance of the builders. A function of complexing agents is to capture trace metal ions like Cu(II), Fe(II), Fe(III), Mn(II), Cd(II), Co(II), Cr(III), Hg(II), Ni(II), Pb(II), Pd(II), Zn(II), Ca(II), Mg(II). These ions can interfere with or disturb certain ingredients of the detergent compositions, i.e., denaturate or precipitate enzymes.

Preferred chelating agents are biodegradable chelating agents like amino acid-based chelating agents, in particular methyl glycine di-acetic acid (MGDA) and di-carboxymethyl glutamic acid (GLDA), preferably as alkali metal, or alkaline earth, ammonium or substitutes ammonium salts thereof, in particular as sodium salts. Another preferred biodegradable chelating agent for use herein is ethylene diamine N,N'- disuccinic acid, or alkali metal, or alkaline earth, ammonium or substitutes ammonium salts thereof or mixtures thereof. Further carboxylate chelating agents include salicylic acid, aspartic acid, glutamic acid, glycine, malonic acid, lactic acid or mixtures thereof.

Further amino carboxylates that may be used herein include ethylene diamine tetra acetates, diethylene triamine pentaacetates, diethylene triamine pentaacetate (DTPA), N-hydroxyethylethylenediamine triacetates, nitrilotri-acetates, ethylenediamine tetrapropionates, triethylenetetraaminehexa-acetates, ethanol-diglycines, propylene diamine tetracetic acid (PDTA), both in their acid form, or in their alkali metal, ammonium, and substituted ammonium salt forms.

A further type of complexing agent is a phosphonate. Suitable phosphonate chelating agents are diethylene triamine penta methylene phosphonate (DTPMP), aminotris(methylenephosphonic acid) (ATMP), ethylene diaminetetra(methylenephosphonic acid) (EDTMP), hexamethylene diamine tetra(methylene phosphonic acid), hydroxyethyl amino di(methylenephosphonic acid) (HEMPA), 2-Phosphonobutane-1,2,4,-tricarboxylic acid (PBTC), and ethane 1-hydroxy diphosphonate (HEDP).

Further chelating agents are ethylenediamine-N,N'-tetraacetic acid (EDTA) or ethylenediamine-N,N'-disuccinic acid (EDDS) or the alkali metal, alkaline earth metal, ammonium, or substituted ammonium salts thereof, or mixtures thereof, provided such use is not objectionable for environmental reasons. Preferred EDTA or EDDS compounds are the free acid form and the sodium salt or complex thereof.

Among the above-mentioned complexing agents, MGDA, commercially available for example from BASF under the trade name of Trilon^{®} M, GLDA, phosphonates, in particular DTPMP, and/or salts thereof are preferred.

The composition(s) may comprise a complexing agent in the form of their acid or a salt, including alkali metal salts such as potassium, sodium, and lithium salts or MEA and TEA salts. Furthermore, phosphonates are used preferably in the form of the neutrally reacting sodium salts, e.g., as a hexasodium salt of EDTMP or as a hepta- or octasodium salt of DTPMP, respectively.

Preferably, complexing agents may be used in an amount from 0 to 10 wt.%, or 0.001 to 7 wt.%, more preferably in an amount from 0.01 to 5 wt.%, even more preferred in an amount from 0.1 to 3 wt.% of the total weight of the composition. Most preferred, the detergent composition according to the present invention comprises 0.5 to 2 wt.% of the total weight of the composition of a complexing agent. Thus, either of the complexing agents can be present in an amount as defined here, but in any case, the total amount of the complexing agents mentioned here is also within the defined range.

However, if phosphonates are used as complexing agents, the composition may comprise less than 10 wt.% phosphonates, or less than 7 wt.%, or less than 5 wt.%, or less than 3 wt.%, or less than 2 wt.%, most preferred less than 1,5 wt.%, based on the total weight of the composition.

### Additional surfactants

Besides the anionic surfactants mentioned above as a necessary ingredient the detergent composition may comprise additionally a total amount of up to 40 wt.%, preferably 1 to 35 wt.%, 1.5 to 30 wt.%, 2 to 25 wt.%, 2.5 to 20 wt.% or 3 to 15 wt.% of any additional surfactant(s). The mentioned ranges refer to the total amount of the added additional surfactants, thus, if a mixture of surfactants is comprised in the composition the sum of the added amounts shall be inside the mentioned ranges and refers to the total amount of the liquid composition.

Suitable surfactants for additional use in the composition herein may be further anionic surfactants (differing from them cited above), nonionic surfactants, gemini surfactants, amphoteric surfactants, zwitterionic surfactants, cationic surfactants or a combination thereof, wherein anionic and nonionic surfactants are particularly preferred.

### Additional anionic surfactants

Preferred additional anionic surfactants comprise or consist of a hydrophobic chain CₙH₂ₙ₊₁ with n = 6 to 24, preferably 8 to 20, more preferred 8 to 18, and an anionic hydrophilic group. The hydrophilic group can e.g., be a phosphate (CₙH₂ₙ₊₁OPO(OH)O⁻ X), an anionic amino acid, a (sulpho)succinate, a (sulfo)acetate, a taurate or any other anionic hydrophilic group. The counter-ion (X) can be any suitable counter-ion, like e.g., Na⁺, K⁺, NH₄⁺, MEA or TEA.

Preferred types of additional anionic surfactants are sulfosuccinates (as mono- or di-esters or a mixture thereof) and sulfoacetates, due to their mild cleaning performance. Examples of suitable anionic surfactants are C₆₋₂₀ alkyl sulfosuccinate, or C₆₋₂₀ alkyl sulfoacetate, in particular as sodium, potassium, MEA, TEA or ammonium salts. If suitable, the sulfosuccinate or sulfoacetate surfactant can also be ethoxylated, e.g., by 3 to 12 EO units.

Preferred alkyl phosphates and alkyl ether phosphates can be made by treating fatty alcohols or alcohol ethoxylates with a phosphorylating agent which yields in a mixture of mono- and di-esters of phosphoric acid.

Further preferred anionic surfactants are amino acid surfactants. Amino acid surfactants can be derived from carboxylate salt of amino acids, wherein the amine group situated on the α-carbon or β-carbon of an amino acid salt is acylated with a C₈ to C₂₂ fatty acid derivative.

Examples of the amino acid surfactants are salts of alanine, arginine, aspartic acid, glutamic acid, glycine, isoleucine, lysine, phenylalanine, serine, tyrosine, valine, sarcosine and any mixture thereof. More preferred are amino acid surfactants such as sodium or potassium salts of caproyl glutamate, cocoyl glutamate, lauroyl glutamate, stearoyl glutamate, myristoyl glutamate, caproyl methyl β-alaninate, cocoyl methyl β-alaninate, lauroyl methyl β-alaninate, stearoyl methyl β-alaninate, myristoyl methyl β-alaninate, caproyl β-alaninate, cocoyl β-alaninate, lauroyl β-alaninate, stearoyl β-alaninate, myristoyl β-alaninate, caproyl glycinate, cocoyl glycinate, lauroyl glycinate, stearoyl glycinate, myristoyl glycinate, caproyl sarcosinate, cocoyl sarcosinate, lauroyl sarcosinate, stearoyl sarcosinate, myristoyl sarcosinate, caproyl aspartate, cocoyl aspartate, lauroyl aspartate, stearoyl aspartate, myristoyl aspartate, and mixtures thereof.

Especially preferred amino acid surfactants in the laundry detergent composition are selected from sodium lauroyl sarcosinate, sodium cocoyl glycinate, sodium cocoyl glutamate, sodium lauroyl glutamate, or a mixture thereof. Most preferred is sodium lauroyl glycinate as well as the MEA or TEA salts thereof.

The additional anionic surfactant(s), besides the anionic surfactants (i), can be present in the composition of the invention in a total amount as cited above for the additional surfactants, and can be present in particular in an amount of from 1 to 20 wt.%, preferably 1.5 to 15 wt.% or 2 to 10 wt.% of the total composition. This definition should be considered as defining that each of the mentioned added anionic surfactants can be individually present in the composition in the defined range, however, the total amount of these types of surfactants is also in said range.

### Nonionic surfactants

It is preferred that the composition of the present invention comprises additionally at least one nonionic surfactant. Nonionic surfactants are commonly known and comprise, e.g., fatty acid ester, alkoxylated fatty alcohols, like fatty alcohol ethoxylates and fatty alcohol propoxylates, alkylglucosides, alkylpolyglucosides and phenolethoxylates, like octyl- or nonyl phenolethoxylates, provided such use is not objectionable for environmental reasons. Preferred nonionic surfactants are alkoxylated fatty alcohols, fatty acid ester or combinations thereof.

The relative hydrophobic hydrocarbon-chain from the fatty alcohol or fatty acid can be saturated, mono-unsaturated or poly-unsaturated and linear or branched. The length of this hydrocarbon-chain commonly varies between 4 and 30 carbon molecules, including 6, 8, 10, 11, 12, 14, 16, 18, 20, 22, 24, 26 or 28.

Alcohol ethoxylates can be prepared by ethoxylation of a fatty chain alcohol. The preferred alcohol ethoxylates have a hydrocarbon-chain that ranges from 4 up to 30 carbon atoms, including 4, 6, 8, 10, 12, 14, 16, 18, 20, 22 and between averagely 1 and averagely 30 ethylene oxide-groups, including averagely 2, 4, 6, 8, 10, 13, 15, 20, 25 ethylene oxide-groups. Preferably, the EO chain can have 2, 3, 4, 5, 6, 7, 8, 9, 10, 11, 12, 13, 14, or 15 EO groups. More preferably, the EO chain can have 2, 3, 4, 5, 6, 7, or 8 EO groups and thus, representing an ethoxylated nonionic surfactant having a short EO chain.

Also suitable are fatty acid ethoxylates that can be prepared by a reaction of fatty acid with glycerol, ethylene glycol or a polyglycol When a (poly)glycol is used a mixture of mono- and di-esters (RCOO⁻(CH₂CH₂O)ₙH or RCOO⁻(CH₂CH₂O)ₙ-OCOR) can be produced.

Nonionic surfactants can be "end-capped" by a methyl or an ethyl group at the end of the alkoxy-chain. This affects the properties of the surfactant, e.g., it decreases the foaming behavior. It is also known that nonionic surfactants can be "end-capped" with a fatty alcohol or a fatty acid where the hydrocarbon-chain varies from 4 up to 26 carbon molecules, including 4, 6, 8, 10, 11, 12, 14, 16, 18, 20, 22. The structure of the surfactants than is "hydrocarbon chain - alkoxy chain - hydrocarbon chain".

In addition, as nonionic surfactants, alkyl glycosides of the general formula RO(G)x can be used in which R is a primary straight-chain or methyl-branched, especially methyl-branched in the 2-position, aliphatic residue having 8 to 22, preferably 12 to 18 carbon atoms, and G is the symbol which represents a glycose unit having 5 or 6 C atoms, preferably glucose. The degree of oligomerization x, which indicates the distribution of monoglycosides and oligoglycosides, is any integer or fractional number between 1 and 10; preferably x is 1.2 to 1.4. Further, alkyl polyglucosides (APG) may be produced by a reaction of a fatty alcohol with several glucose units. Preferred APGs can have averagely two to averagely four glucose units and has a hydrocarbon-chain that varies from 4 up to 26 carbon moieties, including 4, 6, 8, 10, 12, 14, 16, 18, 20, 22 C. Particularly preferred alkylglucosides have a glucose etherified with a C₆₋₂₀ fatty alcohol, e.g. octylglucoside (caprylglucoside), decylglucoside (capringlucoside), dodecylglucoside (laurylglucoside), tetradecylglucoside (myristylglucoside), hexadecylglucoside (cetylglucoside) or octadecylglucoside (stearylglucoside), without being limited to the mentioned. Said alkylglucosides and / or APGs (reference to both types is herein defined as alkyl(poly)glucosides) can be the only type of nonionic surfactants in the composition.

Another type of nonionic surfactants are glucamide surfactants. Glucamides are the reaction product of glucose amine with fatty acid, particularly preferred alkylglucamides have an alkyl chain of C₆₋₂₀ hydrocarbon groups. Further, it is preferred that the glucamides have a C₁₋₃ substituent at the amid nitrogen, preferably methyl or ethyl, most preferred methyl, thus represent an N-C₁₋₃ alkyl glucamide, e.g. octoyl methyl glucamide (caproyl methyl glucamide), decoyl methyl glucamide (caprinoyl methyl glucamide), dodecoyl methyl glucamide (lauroyl methyl glucamide), tetradecoyl methyl glucamide (myristoyl methyl glucamide), hexadecoyl methyl glucamide (cetoyl methyl glucamide) or octadecoyl methyl glucamide (stearoyl methyl glucamide) without being limited to the mentioned e.g. the glucamides offered under the tradename GlucoTain by Clariant, or Cocoyl Methyl Glucamide (INCI) or mixtures thereof.

Suitable further nonionic surfactants according to the invention are, e.g., alkyl amine oxides, amine ethoxylates, and ethylene oxide-propylene oxide co-polymers which may be prepared with a starting material that reacts with ethylene oxide (EO) or propylene oxide (PO) or a mixture of EO and PO (resulting in block copolymers).

The at least one nonionic surfactant(s) can be present in the composition of the invention in a total amount of from 0 to 30 wt.%, preferably in an amount of from 0.5 to 25 wt.%, more preferred from 1 to 20 wt.%, even more preferred from 1.2 to 18 wt.% and most preferred from 4 to 16 wt.%, or from 5 to 15 wt.%, based on the total weight of the composition. This definition should be considered as defining that each of the mentioned added nonionic surfactants can be individually present in the composition in the defined range, however, the total amount of these types of surfactants is also in said range.

Furthermore, the ratio of the total amount of anionic surfactants to nonionic surfactants, if present, in a liquid detergent composition may be between 25 to 1 and 1 to 5, preferably between 18 to 1 and 1 to 4, more preferred between 3 to 1 and 1 to 2, most preferred between 2 to 1 and 1 to 1.5, based on the total weight of the composition. These ranges also include e.g., the ranges of 25:1 to 2:1 or 18:1 to 3:1 as suitable ranges.

### Further optional surfactants

Further optional additional surfactants can be cationic surfactants. Such surfactants have typically a quaternary nitrogen and usually four alkyl chains independently with C₁ to C₂₀. Examples for the alkyl chains are methyl-, ethyl-, propyl-, butyl- as typical short chains and lauryl-, myristyl-, palmityl- or stearyl-chains as typical long chains.

Also, amphoteric (zwitterionic) surfactants can be additionally added. The most representative amphoteric surfactants are betaines or sulphobetaines.

Preferred gemini-surfactants depend of the chosen tail, ion-group and spacer the Geminisurfactant can have different properties. The tail can for example consists of glucoside, poly-glucoside or a hydrocarbon chain. The hydrocarbon chain can be saturated or unsaturated, branched or linear. The ion-group can be cationic (e.g. ammonium), anionic (e.g. phosphate, sulfate, carboxylate) or nonionic. The spacer can be short or long methylene groups, rigid (stilbene), polar (polyether, polyethyleneoxide), and nonpolar (aliphatic, aromatic).

### Enzymes

Preferably, the liquid detergent composition according to the invention comprises at least one enzyme.

The enzymes used in the compositions of the invention are catalytic proteins, and the term "active enzyme" is defined herein as the amount or number of catalytic protein(s), which exhibits enzymatic activity. This can be determined using an activity based analytical enzyme assay.

Enzyme formulations useful for detergents can generally be in a liquid or solid form. Due to liquid enzyme formulations being easier to dissolve or emulsify in a liquid detergent composition, such formulations are preferred.

Suitable enzymes to be used in a liquid detergent composition according to the present invention are for example, enzymes like proteases, phosphodiesterase, cellulases, hemicellulases, gluco-amylases, amylases, mannanases, xylanases, lipases, phospholipases, esterases, cutinases, pectinases, glucanases, keratinases, reductases, oxidases, phenoloxidases, lipoxygenases, ligninases, pullulanases, tannases, pentosanases, malanases, arabinosidases, hyaluronidase, chondroitinase, laccase, or mixtures thereof, without being limited to the mentioned enzymes. Such enzymes support in removal of soil, like protein-, fat- or starch-containing stains as well as in the prevention of laundry graying and/or removal of graying from laundry. Particular cellulases are further able to increase laundry softness by removing pilling and/or microfibrils. Such cellulases are also known as anti-pilling cellulases.

Preferably, the liquid detergent composition comprises at least one enzyme selected from the group of proteases, lipases, amylases, cellulases, pectinases, phosphodiesterase, and mannanases, more preferably selected from proteases, lipases, amylases, cellulases, and mannanases, and even more preferably the composition comprises at least one enzyme selected from the group of proteases, amylases and cellulases. Most preferably, the detergent composition comprises at least one amylase and/or cellulase.

In a preferred embodiment, the liquid detergent composition comprises at least two, at least three, at least four, at least five, at least six, or at least seven enzymes. If at least two enzymes are used in a composition according to the invention, a combination of an amylase and/or cellulase with an enzyme other than amylase or cellulase is preferred.

To achieve optimal cleaning performance while minimizing drawbacks such as the environmental impact, increased costs, stability and shelf life, the enzyme concentration should be balanced.

Amylases are usually incorporated in the compositions herein at levels from 0 to 1.2 wt.%, preferably from 0.00001 to 0.8 wt.%, more preferably from 0.00005 to 0.5 wt.%, even more preferred from 0.0005 to 0.25 wt.% and most preferably from 0.001 to 0.15 wt.% of active enzyme by weight of the detergent composition.

Cellulases are usually incorporated in the compositions herein at levels from 0 to 1 wt.%, preferably from 0.00001 to 0.5 wt.%, more preferably from 0.00005 to 0.25 wt.%, even more preferred from 0.00008 to 0.2 wt.% and most preferably from 0.0001 to 0.15 wt.% of active enzyme by weight of the detergent composition.

Proteases are usually incorporated in the compositions herein at levels from 0 to 1.5 wt.%, preferably from 0.0001 to 1 wt.%, more preferably from 0.001 to 0.6 wt.%, even more preferred from 0.005 to 0.3 wt.% and most preferably from 0.01 to 0.1 wt.% of active enzyme by weight of the detergent composition.

Enzymes other than amylases and/or cellulases are preferably incorporated in the composition herein at levels from 0 to 1 wt.%, preferably from 0.00001 to 0.5 wt.%, more preferably from 0.00005 to 0.2 wt.%, even more preferred from 0.00008 to 0.15 wt.% and most preferably from 0.0001 to 0.1 wt.% of active enzyme by weight of the detergent composition.

Enzymes can be present in the composition of the invention in a total amount of from 0 to 2 wt.%, preferably in an amount of from 0.0001 to 1.5 wt.%, more preferred from 0.001 to 1 wt.%, and most preferred from 0.01 to 0.8 wt.%, based on the total weight of the composition. This definition should be considered as defining that each of the mentioned added enzymes can be individually present in the composition in the defined range, however, the total amount of enzymes is also in said range.

### Enzyme stabilizing compounds

Liquid detergent compositions according to the present invention, which comprise enzymes, may further comprise an enzyme stabilizing compound, which is not boron or a boron derivative. Such compounds are able to decrease the protease activity, which is beneficial during storage, as enzymes are thereby protected from cleavage or degradation by the proteases or from self-degradation, defolding or interaction with enzymes being present in the liquid detergent compositions.

By "boron-free" is meant that no boron-containing compounds are purposefully added to the formulation, but yet it is understood that trace amounts of boron compounds may be present as impurities or as process/stability agents in other additives. Examples of boron compounds include boric acid, boric oxide, borax, alkali metal borates (such as sodium ortho-, meta-, pyroborate, and sodium pentaborate), boronic acids, phenylboronic acids (like 4-formylphenylboronic acid), and derivatives and mixtures thereof.

However, examples of suitable enzyme stabilizing compounds that can be present in the composition of the invention are polyols, particularly glycerol and monopropylene glycol, benzamidine hydrochloride, mono-, di- or tri alkanolamines such as mono-, di- or triethanol amine, acetic acid, polycarboxylic acids having 2 to 4 hydroxyl groups and 3 to 8 carbon atoms, and/or salts of the before-mentioned acids. Such polycarboxylic acids are preferably selected from citric acid, maleic acid, succinic acid, fumaric acid, tartaric acid and malic acid. A further enzyme stabilizing salt is calcium chloride. Formic acid and its salts, e.g., sodium formate or potassium formate, are also able to prevent undesired precipitation of large amounts of enzymes, in particular of amylases and can be used in a composition according to the present invention.

Enzyme stabilizing compounds can be added in an amount of from 0 to 6 wt.%, preferably 0.1 to 5 wt.%, more preferred 0.5 to 4.5 wt.%, even more preferred 0.8 to 4 wt.%, or 1 to 3 wt.% to the total aqueous liquid detergent composition.

### Dye transfer inhibitors

The liquid detergent compositions according to the present invention may additionally comprise one or more dye transfer inhibitors.

During washing of colored laundry, dye molecules may be washed off from colored fibers. This particularly happens at elevated temperatures or in presence of high amounts of surfactants. Redeposition of such washed off dyes on other pieces of laundry may result in undesired color changes of the washed laundry. A dye transfer inhibitor is able to suppress or avoid said effect.

Dye transfer inhibitor(s) may be selected from polymers. Polymeric dye transfer inhibitors react or form complexes with dye molecules, thereby increasing water solubility and preventing redeposition of the dyes. A nonlimiting example of such a polymeric dye transfer inhibitor is a vinylpyrrolidone / vinylimidazole copolymer.

Dye transfer inhibitors can be added in an amount of from 0 to 1.5 wt.% of the total detergent composition, preferably from 0.001 to 1 wt.%, or from 0.005 to 0.5 wt.%, or even 0.01 to 0.25 wt.%.

### Perfume

Fragrances can be used for improving the attractiveness of the detergent to users of the product. It can be used for masking undesired malodors caused by the ingredients of the composition or the washing machine or the soils that were/are present in the washing machine or combinations of these. After the washing in the washing machine has been completed the perfume is responsible for a pleasant smell on the clothes and/or inside the washing machine.

However, perfumes in general can have a negative impact on the physical and microbial stability of the liquid composition. Perfume oils can cause observable phase separation of the detergent emulsion. Microbial stability can be negatively affected by perfumes, especially by natural oils, containing impurities. Unexpectedly, it was found that these disadvantages of perfume oils do not occur in compositions according to the invention.

The liquid composition of the invention may optionally include one or more perfumes or fragrances. As used herein, the term "perfume" is used in its ordinary sense to refer to and include any fragrant substance or mixture of substances including natural extracts and essences such as orange oil, lemon oil, rose extract, lavender, musk, patchouli, balsamic essence, sandalwood oil, pine oil, cedar, and the like. Further suitable fragrant substances are synthetically produced odoriferous compounds. Typically, perfumes are complex mixtures of blends of various organic compounds such as alcohols, aldehydes, ethers, aromatic compounds and essential oils (e.g., terpenes), the essential oils themselves being volatile odoriferous compounds and also serving to dissolve the other components of the perfume.

The detergent composition according to the present invention may comprise at least one perfume in an amount from 0 to 3 wt.%, preferably from 0.1 to 2.5 wt.%, more preferably from 0.2 to 2 wt.%, even more preferred from 0.25 to 1.5 wt.%, most preferred from 0.3 to 1 wt.%, based on the total weight of the composition. Thus, either of the perfumes can be present in an amount as defined here, but in any case, the total amount of the perfume mentioned here is also within the defined range.

### Miscellaneous

Liquid detergent compositions according to the present invention may further comprise other ingredients allowing any desired performance as known by the skilled artisan without limiting the invention.

Other ingredients may include thickeners (e.g., cellulose derivatives), UV-absorbers, foam inhibitors, soil repellents, corrosion inhibitors, fabric softeners, optical brightener, dyes, antioxidants, polymers (e.g., ethoxylated polyethylene imine) and silicon-containing compounds without being limited thereto. All of them can be added in commonly known amounts.

Besides the alkanolamine, the preferred compositions herein can comprise a pH-adjusting component selected from water-soluble inorganic salts and water-soluble organic or inorganic builders. The preferred non-phosphate pH-adjusting component(s) of the invention (partially also representing builder components) is/are selected from the group consisting of: sodium carbonate or sesquicarbonate; sodium silicate, preferably hydrous sodium silicate having SiO₂:Na₂O ratio of from about 1:1 to about 2:1, and mixtures thereof with limited quantites of sodium metasilicate; sodium citrate; citric acid; sodium bicarbonate; sodium hydroxide; L-glutamic acid N,N-diacetic acid, tetrasodium salt; L-glutamic acid N,N-diacetic acid; and mixtures thereof.

### Container

The composition of the present invention can be provided in a container, wherein the container can comprise instructions on how to use the liquid detergent.

The container herein can be of any suitable size known in the art and can be made of any suitable material, such as glass, metal, polymer, and the like. In one embodiment, the container is made of a polymeric material selected from the group consisting of polypropylene (PP), polyethylene (PE), polycarbonate (PC), polyamide (PA), polyethylene terephthalate (PET), polyvinylchloride (PVC), polystyrene (PS), and a combination thereof.

The container herein can be of any form known in the art, such as a bottle, bag, and pouch. Preferably, the container is a bottle.

### Microbial stability testing

The preservative-free aqueous liquid detergent compositions according to the invention exhibit microbial stability at least comparable to commercially available aqueous liquid detergent compositions comprising preservatives. Microbial stability is evaluated by inoculating the sample compositions with selected bacteria, fungi and/or yeast. This artificial contamination is carried out several times at specific time intervals using the same titer for inoculation, corresponding to standard procedures for microbial stability testing. After each addition of bacteria, fungi and/or yeast, their survivability is checked to gather information on whether and with what certainty the added microorganisms are killed. The quality of the storage preservation can be derived from this.

The survivability is checked by cultivation of the microorganisms on individual agar plates, which are stored in an incubator for a specific period of time (bacteria for 48 h, molds/yeasts for 72 h). After incubation, the growth occurring on the culture media is assessed visually (by counting colonies) and evaluated based on a rating scale.

| Growth rate | Mold growth | Bacterial and yeast growth |
|---|---|---|
| 1 | No growth | No growth |
| 2 | Minimal growth | Minimal growth |
| 3 | Light growth | Light growth |
| 4 | Moderate growth | Medium growth |
| 5 | Uniform growth | Heavy growth |
| 6 | Heavy growth | - |
| 7 | Flat growth | - |

### Examples

The following examples are presented in order to illustrate the beneficial effects provided by the present invention and therefore do not limit the scope of the present invention in any way.

All enzymes were received from Novozymes AS. All amounts given in Table 1 referto wt.%, based on the total weight of the detergent composition, except for the pH. In the examples, the ratio of the molar amount of alkanolamine(s) (ii) to the number of acid groups of the anionic surfactant(s) in the composition is in the range of 0.4 to 1.

| Formulation | Ex. 1 | Ex. 2 | Ex. 3 | Ex.4 | Ex. 5 |
|---|---|---|---|---|---|
| Water | 77.80 | 73.30 | 66.05 | 71.05 | 75.75 |
| Anionic surfactant¹ | 5.90 | 5.90 | 8.10 | 21.20 | 3.70 |
| Soap² | 2.80 | 4.60 | 3.00 | 3.90 | 5.00 |
| Alkanolamine³ | 1.00 | 1.00 | 2.00 | 1.00 | 1.40 |
| Nonionic surfactant | 9.00 | 10.50 | 15.70 | 1.20 | 12.40 |
| MPG⁴ | - | - | 1.50 | - | - |
| Phosphonate | 1.30 | 1.49 | 1.80 | - | 0.40 |
| Amylase (active) | 0.0001 | 0.0001 | 0.0001 | - | - |
| Cellulase (active) | 0.0001 | 0.0001 | 0.0001 | - | - |
| Other enzyme preparations | 0.03-0.7 | 0.03-0.7 | 0.03-0.7 | - | - |
| Perfume | 0.3 | 0.3 | 0.3 | 0.3 | 0.3 |
| Miscellaneous (5) | Ad 100 | Ad 100 | Ad 100 | Ad 100 | Ad 100 |

| | | | | | |
|---|---|---|---|---|---|
| (1) H- or Na- or K-C₁₀-C₁₆ alkyl benzene sulfonate and / or alkyl ether sulfate and / or alkyl sulfate (2) H- or Na- or K-soap (3) monoethanolamine and / or triethanolamine (100%) (4) Mono propylene glycol (Propane-1,2-diol) (5) No preservative(s) | | | | | |

All the compositions of Examples 1 to 5 showed no microbial growth during storage for at least 5 weeks.

## Claims

1. A boron-free liquid detergent composition comprising:
(i) at least one anionic surfactant, preferably selected from the group of sulfonates, ether sulfates, and/or alkyl sulfates, and salts of fatty acids (soap), and combinations thereof;
(ii) at least one alkanolamine, preferably ethanolamine, even more preferred monoethanolamine;
(iii) at least 50 wt.% water, wherein the wt.% is based on the total weight of the composition;
wherein said composition has a pH value in the range from 6 to 10, and
wherein said composition comprises less than 0.05 wt.% of a total amount of conventional preservative(s) of the group comprising benzoic acid, benzoates, phenoxyethanol, sorbates, sulfites, phenoxyethanol, sodium or zinc pyrithione, bronopol, iodopropynylbutylcarbamate, formaldehyde and formaldehyde releaser, glyoxal, glutaral and isothiazolinones.

2. The liquid detergent composition according to claim 1, wherein the anionic surfactant(s) (i) is/are selected from the group of C₈₋₁₈ alkyl benzene sulfonate, C₈-₁₈ alkyl ether sulfate (3 - 10 EO), C₈-C₁₈ alkyl sulfate and/or salts of C₈₋₁₈ fatty acids.

3. The liquid detergent composition according to any of the preceding claims, comprising at least two anionic surfactants (i), wherein preferably the at least two anionic surfactants (i) are selected from C₈₋₁₈ alkyl benzene sulfonate and a salt of a C₈₋₁₈ fatty acid.

4. The liquid detergent composition according to any of the preceding claims, wherein the anionic surfactant(s) (i) is/are present in the composition of the invention in a total amount of up to 40 wt.%, or from 0.1 to 30 wt.%, preferably in an amount of from 0.2 to 25 wt.%, more preferred from 0.5 to 23 wt.%, even more preferred from 1 to 22 wt.% or from 1.5 to 21 wt.%, and most preferred from 2 to 20 wt.%, or from 4 to 18 wt.%, or from 5 to 15 wt.%, based on the total weight of the composition.

5. The liquid detergent composition according to any of the preceding claims, wherein the ratio of the molar amount of alkanolamine(s) (ii) to the number of acid groups of the anionic surfactant(s) in the composition may range from 0.1 to 1.5, preferably from 0.2 to 1.3, more preferably from 0.3 to 1.1, and most preferably from 0.4 to 1.

6. The liquid detergent composition according to any of the preceding claims, wherein the composition comprises water in an amount of more than 55 wt.%, preferably more than 60 wt.%, or more than 65 wt.%, and most preferably more than 70 wt.%, based on the total weight of the composition.

7. The liquid detergent composition according to any of the preceding claims, wherein the composition further comprises at least one nonionic surfactant, preferably selected from alkoxylated fatty alcohols, fatty acid ester or combinations thereof.

8. The liquid detergent composition according to claim 7, wherein
(a) the nonionic surfactant(s) is/are present in the composition of the invention in a total amount of from 0 to 30 wt.%, preferably in an amount of from 0.5 to 25 wt.%, more preferred from 1 to 20 wt.%, even more preferred from 1.2 to 18 wt.% and most preferred from 4 to 16 wt.%, or from 5 to 15 wt.%, based on the total weight of the composition, and/ or
(b) the ratio of the total amount of anionic surfactants to nonionic surfactants in a liquid detergent composition is between 25 to 1 and 1 to 5, preferably between 18 to 1 and 1 to 4, more preferred between 3 to 1 and 1 to 2, most preferred between 2 to 1 and 1 to 1.5, based on the total weight of the composition.

9. The liquid detergent composition according to any of the preceding claims, wherein the composition has a pH value in the range of from 6.3 to 9.8, more preferably from 6.5 to 9.5, even more preferably from 6.8 to 9.2, and most preferably between 7 and 9.

10. The liquid detergent composition according to any of the preceding claims, wherein the composition has a viscosity in the range of 10 to 3000 mPa*s, preferably in the range of 20 to 2000 mPa*s, more preferred 30 to 1500 mPa*s, or 50 to 1000 mPa*s, most preferably, the liquid detergent has a viscosity in the range of 65 mPa*s to 800 mPa*s, or even 80 to 600 mPa*s .

11. The liquid detergent composition according to any of the preceding claims, wherein the composition further is free of polymeric polycarboxylates, in particular acrylates.

12. The liquid detergent composition according to any of the preceding claims, wherein the composition comprises individually less than 0.0015 wt.%, preferably less than 0.001 wt.%, more preferred 0.0005 wt.%, even more preferred less than 0.0002 wt.%, and even more preferred less than 0.0001 wt.% of any of the conventional preservative(s) of the group comprising benzoic acid, benzoates, sorbates, sulfites, sodium pyrithione, zinc pyrithion, bronopol, iodopropynylbutylcarbamate, formaldehyde and formaldehyde releaser, glyoxal, glutaral and isothiazolinones like methylisothiazolinone, chloromethylisothiazolinone, benzisothiazolinone, octylisothiazolinone, and butylbenzisothiazolinone.

13. The liquid detergent composition according to any of the preceding claims, wherein the composition comprises at least one enzyme selected from the group of proteases, lipases, amylases, cellulases, pectinases, phosphodiesterase, and mannanases, more preferably selected from proteases, lipases, amylases, cellulases, and mannanases, more preferably selected from the group of proteases, amylases and cellulases, most preferably, the detergent composition comprises at least one amylase and/or cellulase.

14. Use of alkanolamines to reduce/inhibit microbial growth in aqueous systems, preferably in aqueous detergent compositions, more preferred in aqueous detergent compositions, which are free of any conventional preservative as defined in claim 1, and most preferred in a composition according to claims 1 to 13.

15. Use of a combination of alkanolamines (ii) and anionic surfactant(s) (i) to reduce/inhibit microbial growth in aqueous systems, preferably in aqueous detergent compositions, more preferred in boron-free aqueous detergent compositions, which are free of any conventional preservative, and most preferred in a composition according to claims 1 to 13.
